# FASCICULE DE BREVET EUROPEEN

(11) **EP 0 594 476 B1**
(45) Date de publication et mention de la délivrance du brevet: **20.11.1996**
(21) Numéro de dépôt: 93402439.9
(22) Date de dépôt: 05.10.1993
(51) Int. Cl.: B65G 61/00

(54) **Grappin de manutention de charges, comme des sacs, palettiseur comportant un tel grappin, et procédé de palettisation**
Greifer zum Handhaben von Lasten wie Säcke, Palettiervorrichtung mit einem solchen Greifer und Palettierverfahren
Gripper for handling loads, such as bags, palletizer comprising such a gripper and method for palletizing

(30) Priorité: 19.10.1992 FR 9212461
(43) Date de publication de la demande: 27.04.1994
(73) Titulaire: NEWTEC INTERNATIONAL, F-78220 Viroflay (FR)
(72) Inventeur: Carrey, Jean-Christophe, F-68990 Galfingue (FR); Ihler, Jean-Bernard, F-68100 Mulhouse (FR)
(74) Mandataire: Orès, Bernard

(56) Documents cités:
- EP-A- 0 131 555
- DE-A- 2 700 695
- DE-A- 2 723 012

## Description

L'invention concerne un grappin de manutention de charges, comme des sacs, et un palettiseur comportant un tel grappin.

On sait que le regroupement de charges ou colis sur une palette, pour former un fardeau unitaire, est effectué à l'aide d'appareils désignés dans la technique sous le nom de "palettiseurs" lesquels, -dans le cas de charges constituées par des sacs-, comprennent généralement une bande transporteuse suivie d'un convoyeur à rouleaux pour l'amenée des sacs à une hauteur prédéterminée au-dessus du sol, le cas échéant un dispositif d'aplatissement des sacs, des organes permettant d'orienter et de grouper ces derniers et, enfin, des moyens pour déposer suivant un ordonnancement prédéterminé des couches de sacs successives d'abord sur une palette amenée vide au niveau haut du palettiseur par un dispositif transrouleur d'alimentation et un élévateur, puis les unes au-dessus des autres avant que la palette chargée ne soit retirée du palettiseur par un transrouleur d'évacuation. L'uniformisation des dimensions de palettes (800 x 1000 et 1000 x 1200 mm) d'une part, et le souhait des utilisateurs de conserver l'emploi des fardeaux unitaires de dimensions incompatibles avec ces nouvelles palettes, d'autre part, ne permettent plus de déposer les charges sur la palette vide ou sur les couches précédemment formées à l'aide d'un simple râteau pousseur. En effet, les couches des charges ou colis ne doivent pas déborder du périmètre de la palette et ceci exige que les sacs se chevauchent partiellement les uns les autres et un tel chevauchement ne peut être obtenu que par une manutention individuelle des sacs, à l'aide d'un organe de préhension.

Si l'on a déjà proposé, pour un tel organe, un dispositif à ventouses de succion (voir par exemple, FR-A-2 316 177) il ne s'est pas révélé entièrement satisfaisant de sorte qu'ont été développés, par les constructeurs, des palettiseurs à grappin, c'est-à-dire des appareils du type décrit ci-dessus mais dans lesquels les charges individuelles sont manipulées par un dispositif à griffes de préhension entre les rouleaux du convoyeur d'amenée desdites charges et la palette.

On connaît également, pour le regroupement de charges ou colis sur une palette afin de former un fardeau unitaire, des robots de chargement, c'est-à-dire des ensembles modulaires de manutention de structure sensiblement différente de celle des palettiseurs et qui fonctionnent en empilant les colis sur une palette fixe en soulevant lesdits colis à partir du niveau du convoyeur d'amenée placé généralement au sol jusqu'à celui de la dernière couche constituée, c'est-à-dire suivant un principe opposé à celui des palettiseurs où la palette est animée d'un mouvement d'abaissement vertical au fur-et-à-mesure de son chargement pour conserver le niveau de la couche en cours de constitution sensiblement au niveau du convoyeur à rouleaux d'amenée des colis. Lorsque les palettiseurs ou les robots de chargement sont destinés à la manipulation de sacs, -dans le domaine agro-alimentaire, de la chimie, du bâtiment, etc...-, les dispositifs de préhension sont conçus pour permettre la manutention de sacs pesant jusqu'à 50 kilos, avec des moyens de maintien et de centrage des sacs et, le cas échéant, des moyens d'adaptation des dispositifs à différentes largeurs de sacs. Ces derniers sont généralement prélevés sur les rouleaux du convoyeur à rouleaux entre lesquels pénètrent des griffes du dispositif de préhension, -d'abord en condition ouverte-, puis qui se referment et se déplacent par des mouvements combinés de rotation et de translation pour amener le colis à la verticale d'une position prédéterminée où il est déposé lors de l'ouverture des griffes du dispositif de préhension. Ce dernier est entraîné dans ses divers mouvements par des mécanismes à engrenages actionnés à partir de moto-réducteurs avec des vérins pneumatiques dont les positions de fin de course sont généralement détectées électriquement, les liaisons électropneumatiques des divers organes étant réalisées par l'intermédiaire de câbles et de conduites qui limitent nécessairement l'angle de rotation des dispositifs de préhension dans le cas des palettiseurs, tandis que s'ajoutent à cette limitation, dans le cas des robots, des chaînes cinématiques complexes et, partant, fragiles et coûteuses (voir, par exemple, EP-0 131 555, FR-2 506 275 ou FR-2 560 172). Les préambules des revendications 1 et 9 sont basés sur l'état de la technique selon EP-A-0 131 555.

C'est, d'une façon générale, un but de l'invention de fournir un grappin perfectionné qui pallie les inconvénients des dispositifs de préhension connus.

C'est, à cet égard, un but de l'invention de fournir un tel grappin à fonctionnement sûr dans toutes les conditions opératoires, qui ne nécessite que peu d'entretien et dont les pièces mobiles, -en particulier les parties tournantes comme des raccords et autres organes de commande-, ne soient pas soumises à une usure importante.

C'est, aussi, un but de l'invention de fournir un tel grappin propre à assurer la manutention de colis ou charges, comme des sacs, dont les largeurs peuvent varier dans des limites importantes, de l'ordre de 200 à 600 mm.

C'est, encore, un but de l'invention de fournir un tel grappin propre à assurer la manutention, sans les endommager, de charges en partie déformables, comme des sacs remplis de matériaux en vrac utilisés dans les industries agro-alimentaires, de la chimie et/ou du bâtiment.

C'est, également, un but de l'invention de fournir un tel grappin qui assure la manutention des colis à un rythme extrêmement rapide.

C'est, enfin, un but de l'invention de fournir un palettiseur à prise unitaire comportant un grappin perfectionné ainsi qu'un procédé de palettisation propres à assurer, à cadence élevée, la réalisation de palettes constituées de charges ou colis, comme des sacs, dans d'excellentes conditions de fiabilité et à un coût d'entretien particulièrement faible.

Ces buts et d'autres encore sont atteints dans un grappin de manutention de charges selon la revendication 1, dans un palettiseur selon la revendication 7 et le procédé selon la revendication 9.

Un tel grappin permet alors de s'affranchir des moyens élévateurs généralement prévus sur les convoyeurs à rouleaux des palettiseurs usuels, d'une part et, d'autre part, de déposer chaque charge unitaire avec une faible ou très faible hauteur de chute, tout en maintenant fermement ladite charge en position au cours de son transport.

Dans une forme de réalisation préférée de l'invention, les moyens engendrant les mouvements de montée et/ou descente des griffes du grappin ainsi que ceux des organes de serrage et de maintien de chaque charge unitaire comprennent des leviers oui portent à une de leurs extrémités des axes d'articulation à pivotement desdites griffes et desdits organes de serrage et qui sont montés à oscillation à leurs autres extrémités autour d'un axe.

Selon une autre caractéristique de l'invention, les extrémités libres des griffes sont munies de roulettes facilitant le positionnement desdites griffes sous chaque charge unitaire à saisir, porter, puis transporter.

Dans une forme de réalisation préférée de l'invention, les moyens de serrage et de maintien en position correctement centrée de chaque charge unitaire sont constitués par deux volets associés, respectivement, à chacun des jeux de griffes du grappin, lesdits volets étant montés à pivotement autour des mêmes axes que ceux de pivotement des griffes sur les leviers oscillants et étant reliés entre eux par des moyens provoquant leur rapprochement ou leur écartement lorsque sont actionnés des moyens de commande correspondants.

Pour qu'un palettiseur équipé d'un grappin selon l'invention puisse fonctionner aux allures souhaitées, par exemple à une cadence de l'ordre de 1000-1200 sacs/heure, il importe que chaque phase du fonctionnement du grappin, -entre la prise d'une charge unitaire et la pose de ladite charge à la position prédéterminée-, soit de durée aussi courte que possible, de l'ordre d'une fraction de seconde.

Pour ce faire l'invention prévoit, en particulier, que les déplacements en rotation puissent être effectués sur 360°, sans avoir à revenir à une position d'indexation d'origine.

Dans ce but, les moyens d'alimentation en air comprimé des différents organes de commande des griffes, leviers, volets, etc... du grappin sont placés sur une partie montée à rotation et dérivent d'une conduite d'alimentation principale par l'intermédiaire d'un joint tournant, la distribution électrique, -de même que les raccordements des organes capteurs associés aux différentes parties mobiles du grappin-, étant réalisée par un collecteur électrique à bagues et balais placé dans l'axe du joint tournant et au travers duquel passe la conduite d'air comprimé.

Une telle disposition permet, en outre, de réduire les contraintes mécaniques appliquées au câblage électropneumatique, avec pour conséquence une plus grande durée de vie et un plus faible entretien de l'ensemble du grappin.

Lorsque ce dernier est associé à un palettiseur à prise unitaire comprenant :
. une bande transporteuse suivie par un convoyeur à rouleaux pour l'amenée des charges, comme des sacs, à un niveau haut prédéterminé au-dessus du sol ;
. des moyens de commande des mouvements de déplacement en rotation et translation du chariot portant le grappin ;
. un portique supportant le chariot et qui est mobile en translation dans une direction perpendiculaire à celle du mouvement de translation du chariot ; et
. un élévateur pour déplacer une palette amenée d'abord vide au niveau haut, puis l'abaisser graduellement au fur et à mesure de son chargement avant de la retirer par un transrouleur d'évacuation, ledit palettiseur est caractérisé en ce qu'il comprend également des rives de guidage pour aider au positionnement, -sur la palette d'abord vide-, puis sur les couches successives dont elle est garnie, des charges unitaires déposées par le grappin.

Pour que le palettiseur selon l'invention fonctionne à la cadence élevée requise, de l'ordre de 1000-1200 sacs/heure, on prévoit de faire application de moto-réducteurs à moteurs synchrones à aimants permanents et de moto-variateurs sans balais pour la commande d'axes, l'ensemble étant piloté par des modules de régulation et d'alimentation paramétrables.

L'invention sera bien comprise par la description qui suit, faite à titre d'exemple et en référence au dessin annexé dans lequel :
- la figure 1 est une vue schématique, en perspective, d'un grappin selon l'invention ;
- la figure 2 est une vue de dessus, partie en coupe et partie en élévation avec certaines parties ôtées dans un but de clarté, d'un dispositif selon l'invention;
- la figure 3 est une vue de côté, avec coupes partielles et certaines parties également été ôtées dans un but de clarté, d'un dispositif selon l'invention ;
- les figures 4 et 5 sont des vues schématiques en élévation, dans le sens de la flèche V de la figure 1, illustrant le fonctionnement d'un grappin selon l'invention ;
- la figure 6 est une vue schématique en perspective d'un palettiseur muni d'un grappin selon l'invention ;
- les figures 7 à 12 sont des vues schématiques illustrant les mouvements d'un grappin selon l'invention au cours du chargement d'une palette.

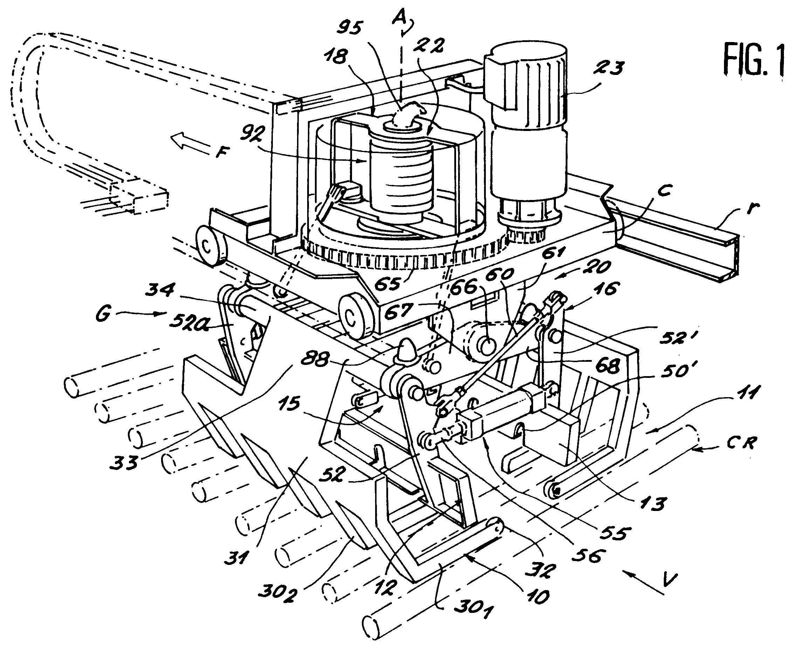

On se réfère d'abord à la figure 1 qui montre un grappin selon l'invention, G, pour la manutention de charges, comme des sacs, renfermant des charges pulvérulentes, par exemple, -mais sans que cette indication n'ait aucun caractère limitatif-, du type de ceux que l'on rencontre dans le domaine des industries agro-alimentaires, de la chimie, du bâtiment, etc... dont la forme générale est celle d'un parallélépipède aplati à coins arrondis et dont le poids peut atteindre 50 kg.

Le grappin G, monté sur un chariot C mobile à translation suivant la direction de la flèche F en étant guidé par des rails r comprend essentiellement :
. deux jeux de griffes 10 et 11 destinées à saisir une charge unitaire comme un sac s, sur un convoyeur à rouleaux CR, puis à porter cette charge à l'aplomb d'une position prédéterminée avant de la déposer sur une palette P proprement dite ou sur une couche d'autres sacs s déjà déposés sur ladite palette ;
. des organes de serrage et de maintien de la charge unitaire, constitués par deux volets 12 et 13 prévus pour coopérer avec les faces latérales de ladite charge et qui la centrent par rapport aux jeux de griffes 10, 11 ;
. des moyens 15 d'actionnement des jeux de griffes et des moyens 16 d'actionnement des volets ;
. un équipage 18 monté à rotation autour d'un axe A perpendiculaire à la direction de déplacement F du chariot C ;
. des moyens moteurs 23 d'entraînement en rotation de l'équipage 18 ;
. des moyens 20 de liaison des jeux de griffes et volets audit équipage rotatif 18 ;
. des moyens 21 de commande des mouvements des pièces mobiles du grappin avec, dans lesdits moyens ou associés à ces derniers, des capteurs de position ; et
. un ensemble électropneumatique 22 d'alimentation en air comprimé et en électricité des moyens 15, 16 et 21.

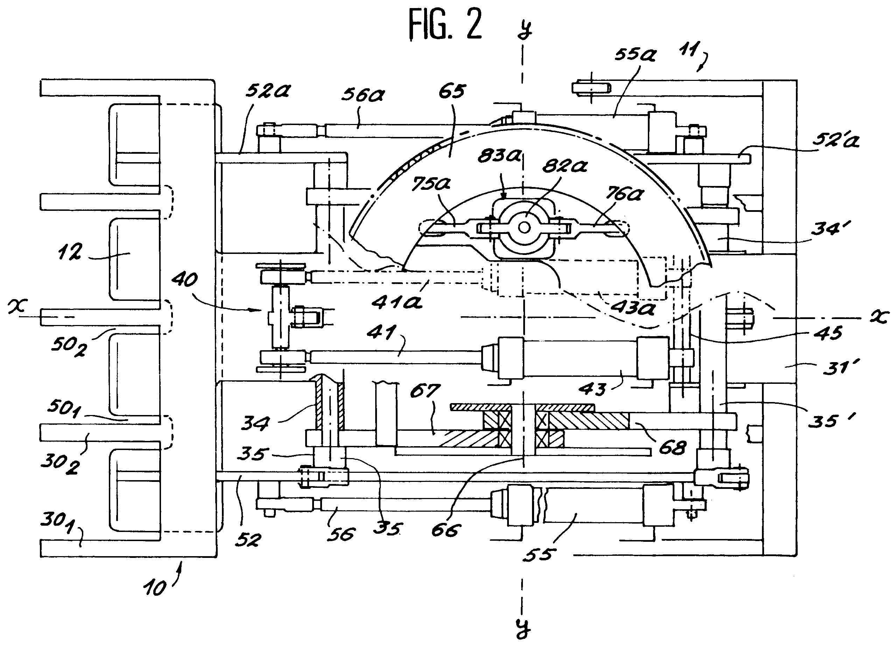

Etant donné que le grappin G est à structure sensiblement symétrique par rapport à un plan médian longitudinal de trace x-x, figure 2 (correspondant à la direction de la flèche F) de même que par rapport à un plan transversal de trace y-y (et ainsi perpendiculaire au plan précédent de trace x-x) on ne décrira ci-après qu'une partie des pièces mobiles du grappin, avec la convention que les pièces symétriques de celles décrites par rapport au plan de trace x-x seront marquées de l'indice "a" alors que les pièces symétriques de celles décrites par rapport au plan de trace y-y seront frappées de l'indice "'".

Chaque jeu de griffes 10 et 11, dont seul le jeu 10 sera décrit ci-après, est constitué par une série de griffes parallèles 30₁, 30₂, ..., figures 1, 4 et 5, quelque peu en forme de L dont la hampe serait incurvée et qui sont reliées à l'extrémité haute desdites hampes par une barre 31, tandis que leurs extrémités libres portent des roulettes 32. De la barrette 31 est solidaire une courte traverse 33 dont l'extrémité distante de la barrette porte un arbre 34, d'axe 35, figure 2, dirigé parallèlement à la direction F de déplacement du chariot et autour duquel peut pivoter le jeu de griffes 10, comme il sera explicité ci-après. Sur la face interne de la traverse 33, -c'est-à-dire celle qui est en regard de la traverse correspondante 33' du jeu de griffes 11-, sont attelées, par un palier multiple 40, les tiges 41 et 41ₐ de vérins 43 et 43ₐ, respectivement, montés à tourillonnement sur un palier multiple 45 de la face interne de la barrette 31' et qui sont prévus pour rapprocher et/ou écarter l'une de l'autre les parties libres d'extrémité portant les roulettes 32 des griffes 30 et 30' par pivotement des arbres 34 et 34'.

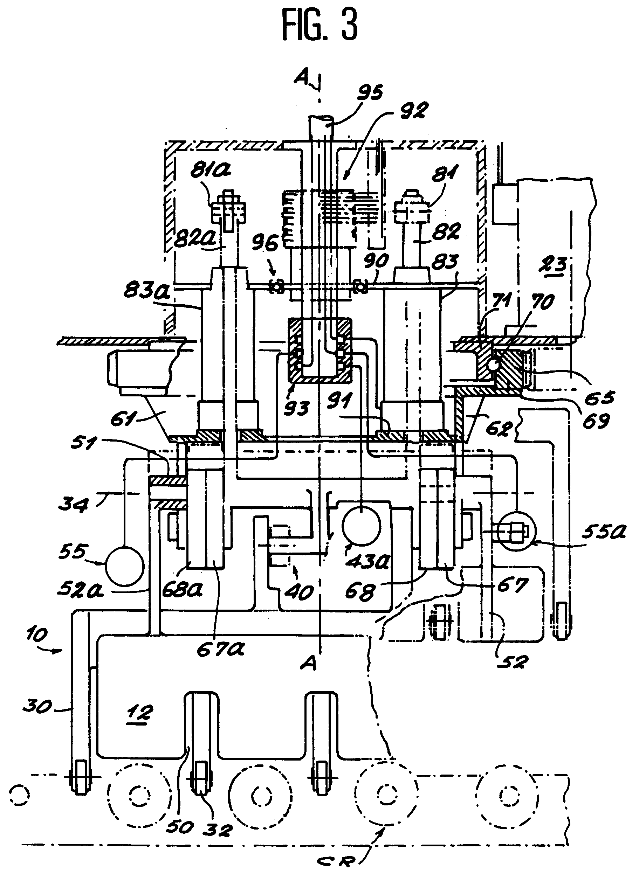

Les volets 12 et 13, qui sont découpés suivant des encoches 50₁, 50₂, etc... en correspondance des griffes du jeu 10 et suivant des encoches 50'₁, 50'₂ etc... en correspondance des griffes du jeu 11 sont eux aussi montés à pivotement autour des axes 35 et 35' par l'intermédiaire de courts fourreaux comme 51, fixés aux extrémités de bras 52 et 52ₐ, figure 3, sur laquelle le jeu de griffes 11 et le volet 12 sont représentés en trait plein dans leur position basse et en trait mixte dans leur position haute. Pour actionner les volets 12 et 13, d'une façon qui sera décrite plus en détail ci-après, les bras 52 et 52ₐ du volet 12 sont reliés aux bras 52' et 52'ₐ du volet 13 par deux vérins 55 et 55ₐ dont les corps sont fixés sur les bras 52' et 52'ₐ et dont les tiges 56 et 56ₐ sont attelées sur les bras 52 et 52ₐ, bras sur lesquels sont également attelées, en une zone distante de leur extrémité haute, une première extrémité d'une tringle de synchronisation 60 dont l'autre extrémité est attelée en partie haute du bras 52', figures 1, 2 et 4.

Les jeux de griffes 10, 11 et les volets 12, 13 qui viennent d'être décrits sont reliés à l'équipage rotatif 18, lui-même monté sur le chariot C, par des organes 20 qui comprennent essentiellement un platine 69 et deux potences 61 et 62. Celles-ci sont fixées, à leurs extrémités supérieures et par l'intermédiaire de la platine 69, sur une couronne dentée 65 et elles ménagent, à leur extrémité inférieure, un axe de tourillonnement 66, figures 1, 2, 4 et 5, pour deux leviers oscillants 67 et 68 qui portent à leurs extrémités distantes de l'axe 66 des paliers de pivotement des arbres 34 et 34' des jeux de griffes 10 et 11, lesquels sont co-linéaires, comme indiqué ci-dessus, aux axes de pivotement des volets 12 et 13.

Comme montré sur les figures 3, 4 et 5, la couronne dentée 65 est montée à rotation par un roulement 70 sur un anneau 71, lequel est traversé à la fois par une partie des moyens 21 de commande des mouvements des pièces mobiles du grappin G et par l'ensemble électropneumatique 22 d'alimentation en air comprimé et en électricité des moyens 15, 16 et 21 pour l'actionnement des jeux de griffes et des volets, ainsi que des capteurs qui leur sont associés, notamment les capteurs de fin de course des vérins.

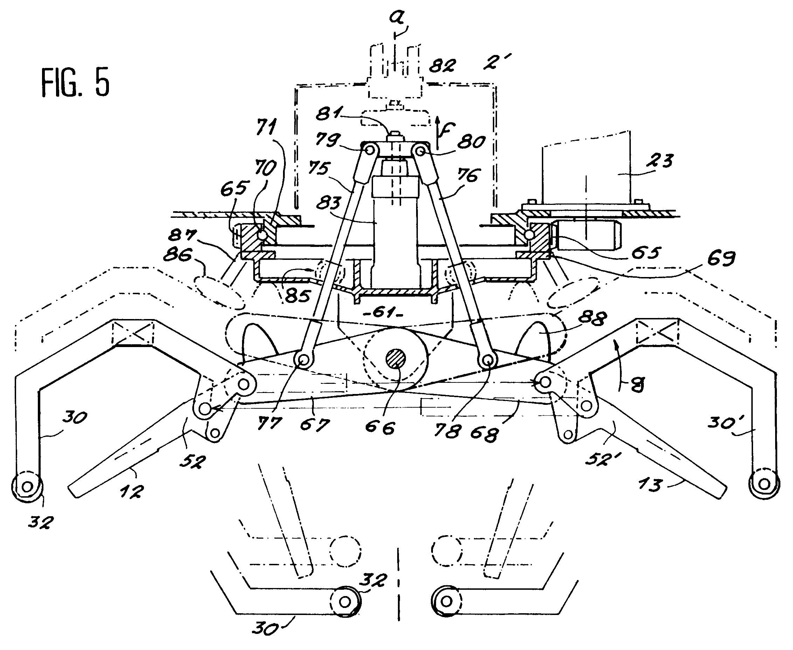

De façon plus précise, les moyens de commande des mouvements des jeux de griffes 10 et 11 comprennent, outre les vérins 43 et 43ₐ mentionnés ci-dessus pour le rapprochement ou l'éloignement des extrémités libres des griffes 30 et 30', des organes de commande des mouvements d'oscillation des leviers 67 et 68 constitués par deux jeux de tringles 75, 76, figure 5, et 75ₐ, 76ₐ, figure 2, attelées respectivement les premières sur les leviers 67 et 68 et les secondes sur les leviers correspondants 67ₐ et 68ₐ. Les tringles du premier jeu sont attelées par leurs extrémités 77 et 78 sur les leviers 67 et 68 et par leurs autres extrémités 79 et 80 sur une chape 81 solidaire de la tige 82 d'un vérin 83 d'axe vertical (et ainsi perpendiculaire à la direction de déplacement F du chariot C) tandis que les tringles du second jeu sont attelées de la même manière sur la chape 81ₐ de la tige 82ₐ d'un vérin 83ₐ, ce dernier, comme le vérin 83, étant fixé, en partie haute, sur une plaque 90 et, en partie basse, sur une plaque 91 faisant partie de l'équipage rotatif 18.

Sur les tringles 75, 76, 75ₐ et 76ₐ sont fixés des butoirs, comme montré en 85 pour la tringle 75, d'autres butoirs 86 étant également prévus pour les jeux de griffes 10 et 11, aux extrémités de courts bras comme 87 fixés sur la platine 69, tandis que des butoirs coniques en caoutchouc, comme 88, sont également prévus sur les faces supérieures des leviers 67, 68, 67ₐ et 68ₐ.

Pour commander l'actionnement du grappin G, c'est-à-dire alimenter électro-pneumatiquement les différents vérins de commande ainsi que des capteurs de fin de course des tiges de ces vérins, l'invention prévoit que les moyens d'alimentation en air comprimé et en électricité des différents organes qui constituent l'ensemble 22 soient placés sur l'équipage rotatif 18, figure 3. Comme visible sur cette figure, l'équipage rotatif 18, -qui porte les vérins 83 et 83ₐ par l'intermédiaire des plaques 90 et 91-, peut être animé d'un mouvement de rotation autour de l'axe A lorsque le moteur 23 (avantageusement du type synchrone à aimants permanents) est rendu opératoire (en étant piloté par des modules de régulation et d'alimentation paramètrables) et qu'il entraîne la roue dentée 65. Cette rotation, à laquelle participe un capot 42 qui recouvre l'ensemble, est effectuée en laissant immobile un collecteur électrique 92, à bagues et balais, relié, -en lui étant coaxial-, à un joint tournant 93 d'alimentation en air comprimé de trois électro-distributeurs connectés, d'une part, aux différents vérins du grappin et alimentés, d'autre part, par une conduite d'alimentation principale 95, un roulement 96 étant interposé entre la plaque 90 et le carter du collecteur électrique à bagues et balais 92.

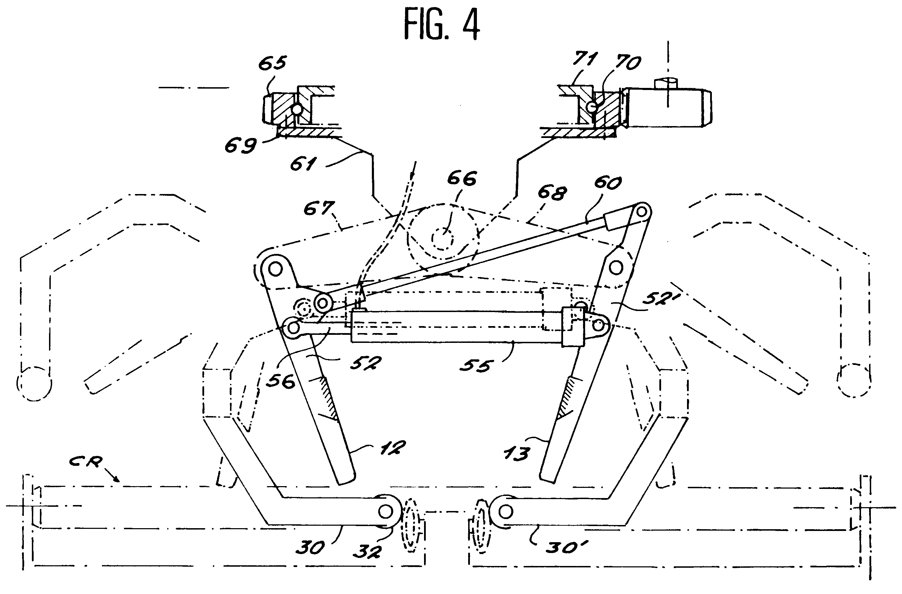

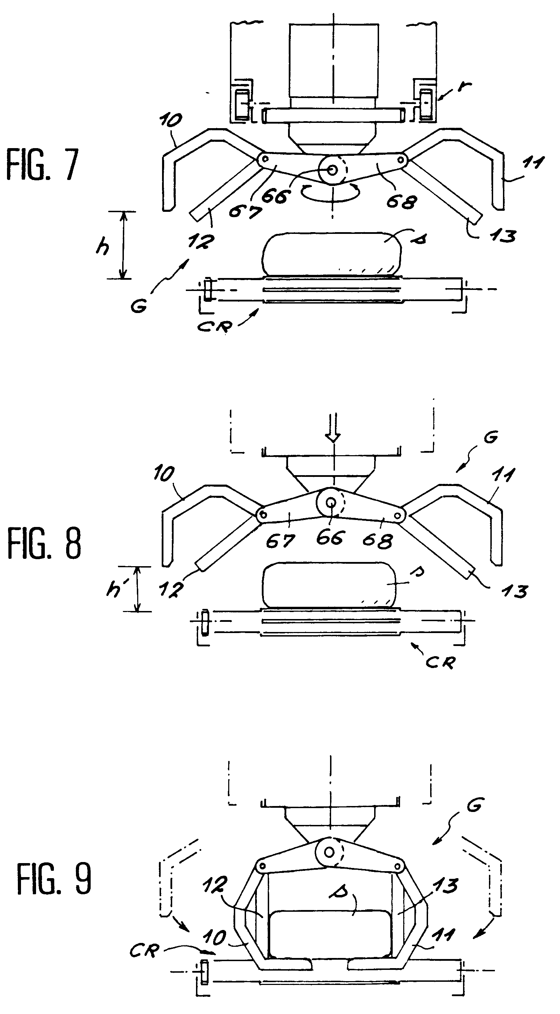

Le fonctionnement d'un grappin selon l'invention est illustré sur les figures 4 et 5 et 7 à 12. Comme bien montré sur celles-ci, la condition initiale, qui est celle de la figure 7 ou celle figurée en trait mixte sur la figure 5, est la condition d'origine en laquelle les extrémités libres des griffes 30, 30' des jeux 10 et 11 sont le plus distantes entre elles, comme le sont les bords d'extrémité des volets 12 et 13, ces bords et ces extrémités libres étant à une distance h de l'axe des rouleaux du convoyeur à rouleaux CR. Lorsque ce dernier amène, au droit du grappin G, un sac s à placer sur la palette vide P, ou sur d'autres sacs déjà déposés sur la palette, les jeux de griffes 10 et 11 et les volets 12 et 13 s'abaissent, figure 8, en réponse à l'actionnement des vérins 83 et 83ₐ qui entraînent les tringles 75, 76, 75ₐ, 76ₐ : la distance h' qui sépare les extrémités libres des griffes et les bords des volets devient inférieure à h, d'une longueur qui peut être de l'ordre de 80 mm dans une réalisation ayant donné de bons résultats. A partir de cette condition, l'actionnement des vérins 55 et 55ₐ, d'une part, et celui des vérins 43 et 43ₐ, d'autre part, provoque l'amenée sur les faces latérales du sac s des volets 12 et 13 simultanément au positionnement des extrémités des griffes 30 et 30' sous ledit sac, entre les rouleaux du convoyeur CR, les roulettes 32 contribuant à éviter la détérioration du sac dans la position de prise de ce dernier qui est celle montrée sur la figure 9.

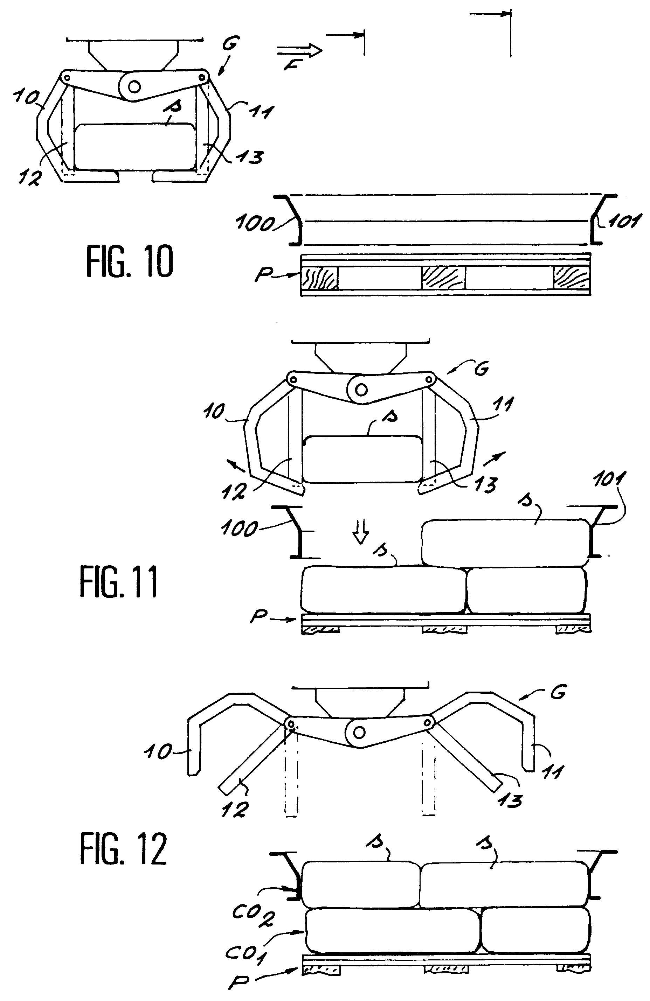

Lorsque, à partir de cette position, les vérins 83 et 83ₐ sont commandés pour faire sortir leurs tiges 82 et 82ₐ, c'est-à-dire pour soulever les chapes 81 et 81ₐ dans la direction de la flèche f montrée sur la figure 5, les leviers 67, 68, 67ₐ , 68ₐ, -entraînés par les tringles 75, 76, 75ₐ, 76ₐ-, pivotent autour des axes comme 66, dans le sens de la flèche g, figure 5, en soulevant le sac s à l'écartement du convoyeur à rouleaux CR. Le sac s, supporté par les griffes 30, 30' et maintenu serré pour son centrage par les volets 12 et 13, figure 10, est alors amené à l'aplomb de la position prédéterminée correspondant à l'ordonnancement choisi sur la palette vide P ou sur les couches de sacs déjà déposés sur celle-ci par un déplacement du chariot C suivant la direction de la flèche F, simultanément à une rotation autour de l'axe A en réponse à une commande du moteur 23. Lorsque le grappin G équipe un palettiseur, comme il sera décrit ci-après, les mouvements du chariot et du grappin peuvent être accompagnés du déplacement d'un portique portant le chariot, perpendiculairement à la direction de la flèche F.

Que le grappin soit ou non associé à un palettiseur, il libère la charge unitaire qu'il transporte, -lorsqu'il a atteint la position requise en réponse aux ordres donnés de préférence par des motovariateurs sans balais pour la commande d'axes pilotés par des modules de régulation et d'alimentation paramétrables-, quand, comme montré sur la figure 11, les extrémités libres des griffes 30 et 30' sont écartées les unes des autres, en réponse à une commande des vérins 43 et 43ₐ qui tend à faire sortir leurs tiges 41 et 41ₐ, les volets 12 et 13 demeurant cependant dans leur condition rapprochée.

Lorsque les vérins 55 et 55ₐ sont ensuite commandés pour provoquer la sortie de leurs tiges 56, 56ₐ les volets 12 et 13 s'écartent eux aussi, figure 12, en libérant le sac s qui vient occuper la position de l'ordonnancement prédéterminé en étant guidé, lors de sa chute qui est de faible hauteur, par les rives comme 100 et 101 associées au palettiseur.

Le grappin G est alors ramené au droit du convoyeur à rouleaux CR et un nouveau cycle tel que décrit ci-dessus peut se dérouler.

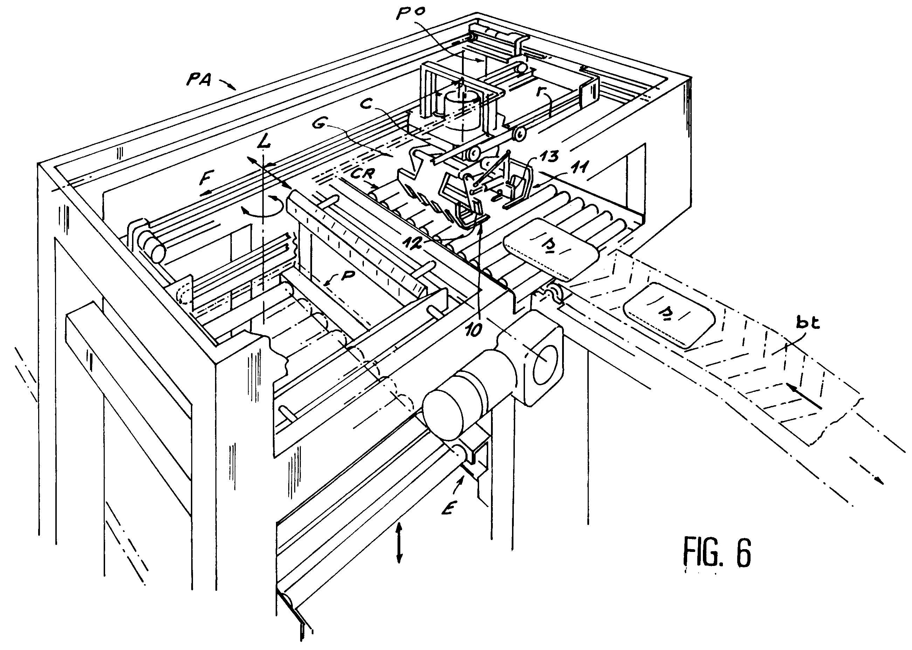

Un grappin G selon l'invention trouve avantageusement application pour équiper un palettiseur à prise unitaire PA, figure 6, comprenant :
. une bande transporteuse bt suivie par le convoyeur à rouleaux CR amenant les charges, comme des sacs s, à un niveau haut prédéterminé au-dessus du sol ;
. des moyens de commande des mouvements de déplacement en rotation et en translation du chariot C portant le grappin G ;
. un portique po supportant le chariot C et qui est mobile en translation dans la direction L perpendiculaire à celle montré par la flèche F du chariot ;
. un élévateur E pour déplacer une palette P amenée d'abord vide au niveau haut puis l'abaisser graduellement au fur et mesure de son chargement suivant des couches de sacs co₁, co₂, ...etc, avant de la retirer par un transporteur d'évacuation, non représenté.

Dans un tel palettiseur muni, selon l'invention, des rives de guidage comme 100 et 101, la manutention des charges peut avoir lieu à cadence élevée, de l'ordre de 1000-1200 sacs/heure, avec l'optimisation souhaitée du fardeau qui exige que les sacs se chevauchent partiellement les uns les autres.

On constate complémentairement, dans un tel palettiseur selon l'invention, que les contraintes mécaniques appliquées au câblage électropneumatique du grappin sont plus réduites que celles qu'endurent les dispositifs connus, avec pour conséquence une plus grande durée de vie et un plus faible entretien de l'ensemble.

## Revendications

1. Grappin de manutention de charges comme des sacs (s) monté à rotation autour d'un axe (A) perpendiculaire à celui (F) du déplacement en translation d'un chariot (C) auquel il est relié, et qui comporte deux jeux de griffes (10, 11) destinés à saisir, puis porter une charge unitaire ainsi que des organes (12, 13) de serrage et de maintien de ladite charge unitaire (s) au cours de son transport entre une première position où la charge a été saisie et une seconde position où ladite charge est déposée, aux deux jeux (10, 11) de griffes et aux organes (12, 13) de serrage et de maintien de la charge unitaire transportée étant associés des moyens (67, 68, 75, 76...83, 83ₐ) propres à les soulever et/ou les abaisser par rapport audit chariot mobile (C), caractérisé en ce que ces moyens comportent de leviers (67, 68) oscillant autour d'un axe horizontal (66) et portant à leurs extrémités distantes de cet axe les jeux de griffes et les organes de serrage et de maintien de la charge.

2. Grappin selon la revendication 1, caractérisé en ce que les mouvements de montée et/ou descente des griffes ainsi que ceux des organes (12, 13) de maintien et de serrage de chaque charge unitaire (s) comprennent des leviers (67, 68, 67ₐ, 68ₐ) qui portent à une de leurs extrémités des axes d'articulation à pivotement desdits jeux de griffes (10, 11) et desdits organes de serrage (12, 13) et qui sont montés à oscillation à leurs autres extrémités autour d'un axe (66) parallèle à celui du déplacement en translation (F) du chariot (C).

3. Grappin selon la revendication 1 ou 2, caractérisé en ce que les extrémités des griffes (30, 30') sont munies de roulettes (32) facilitant le positionnement desdites griffes sous chaque charge unitaire à saisir, porter, puis transporter.

4. Grappin selon l'une quelconque des revendications précédentes, caractérisé en ce que les organes (12, 13) de serrage et de maintien en position correctement centrée de chaque charge unitaire (s) sont constitués par deux volets (12, 13) associés, respectivement, à chacun des jeux de griffes (10, 11), lesdits volets étant montés à pivotement autour des mêmes axes (35, 35') que ceux de pivotement des jeux de griffes (10, 11) sur les leviers oscillants (67, 68, 67ₐ, 68ₐ).

5. Grappin selon l'une quelconque des revendications précédentes, caractérisé en ce que les moyens d'alimentation en air comprimé et en électricité des différents organes de commande des jeux de griffes (10, 11) leviers, volets (12, 13), etc... sont agencés pour permettre des déplacements en rotation sur 360° sans avoir à revenir à une position d'origine.

6. Grappin selon la revendication 5, caractérisé en ce que les moyens d'alimentation en air comprimé des différents organes de commande des jeux de griffes (10, 11), leviers, volets (12, 13), etc... sont placés sur un équipage monté à rotation (18) et dérivent d'une conduite d'alimentation principale par l'intermédiaire d'un joint tournant (93), la distribution électrique, -de même que les raccordements des organes capteurs associés aux différentes pièces mobiles-, étant réalisée par un collecteur électrique à bagues et balais (92) placé dans l'axe du joint tournant (93) et au travers duquel passe la conduite d'air comprimé (95).

7. Palettiseur à prise unitaire, caractérisé en ce qu'il comprend un grappin (G) selon l'une quelconque des revendications précédentes.

8. Palettiseur selon la revendication 7, comprenant :
. une bande transporteuse (bt) suivie par un convoyeur à rouleaux (CR) pour l'amenée des charges, comme des sacs (s), à un niveau haut prédéterminé au-dessus du sol ;
. des moyens de commande des mouvements de déplacement en rotation et translation du chariot (C) portant le grappin (G) ;
. un portique (po) supportant le chariot (C) mobile en translation dans une direction (L) perpendiculaire à celle (F) du mouvement de translation du chariot ; et un élévateur (E) pour déplacer une palette (P) amenée d'abord vide au niveau haut, puis l'abaisser graduellement au fur et à mesure de son chargement avant de la retirer par un transrouleur d'évacuation, caractérisé en ce qu'il comprend des rives de guidage (100, 101) pour aider au positionnement sur la palette (P) d'abord vide, puis sur les couches successives (co₁, co₂) dont elle est garnie, des charges unitaires (s) déposées par le grappin (G).

9. Procédé de palettisation de charges comme des sacs (s) comportant les étapes consistant à :
a) amener une charge au droit d'un grappin de manutention monté à rotation autour d'un axe (A) perpendiculaire à celui (F) du déplacement en translation d'un chariot (C) auquel il est relié, et qui comporte deux jeux de griffes (10, 11) destinés à saisir, puis porter une charge unitaire ainsi que des organes (12, 13) de serrage et de maintien de ladite charge unitaire (s) comportant des moyens (67, 68, 75, 76...83, 83ₐ) propres à soulever et/ou abaisser les deux jeux (10, 11) de griffes et organes (12, 13) de serrage et de maintien de la charge unitaire transportée par rapport audit chariot mobile (C) ;
b) saisir la charge avec le grappin ;
c) positionner le grappin au-dessus d'une palette ;
d) libérer la charge pour la déposer sur la palette proprement dite (P) ou sur une couche d'autres charges déjà déposées sur ladite palette (P) ;
e) recommencer les cycles a) à d) jusqu'à la constitution d'une palette,
caractérisé en ce que les dits moyens comportent des leviers oscillant autour d'un axe horizontal et portant à leurs extrémités distants de cet axe les jeux de griffes et les organes de serrage et de maintien de la charge unitaire, en ce que, entre les étapes a) et b), il comporte une étape f) consistant à abaisser les deux jeux de griffes (10, 11) et organes (12, 13) de serrage et de maintien de la charge unitaire par rapport audit chariot mobile (c), et en ce que, entre les étapes b) et c), il comporte une étape g) consistant à soulever les deux jeux de griffes et organes de serrage et de maintien de la charge unitaire par rapport au chariot mobile.

## Claims

1. Grab for handling loads such as bags (s) mounted for rotation about an axis (A) perpendicular to that (F) of translational displacement of a carriage (C) to which it is connected, and which comprises two sets of claws (10, 11) designed to grip, then carry a unit load as well as members (12, 13) for clamping and maintaining said unit load (s) during transport thereof between a first position in which the load was gripped and a second position in which said load is deposited, wherein associated with the two sets (10, 11) of claws and with the members (12, 13) for clamping and maintaining the unit load transported are means (67, 68, 75, 76...83, 83a) suitable for lifting and/or lowering them relative to said movable carriage (C), characterised in that these means comprise levers (67, 68) oscillating about a horizontal axis (66) and carrying at their ends remote from this axis the sets of claws and the load clamping and maintaining members.

2. Grab according to claim 1, characterised in that the movements of ascent and/or descent of the claws as well as those of the members (12, 13) for maintaining and clamping each unit load (s) include levers (67, 68, 67a, 68a) which carry at one of their ends hinge pins for pivoting of said sets of claws (10, 11) and of said clamping members (12, 13) and which are mounted for oscillation at their other ends about an axis (66) parallel to that of translational displacement (F) of the carriage (C).

3. Grab according to claim 1 or 2, characterised in that the ends of the claws (30, 30') are provided with castors (32) facilitating positioning of said claws under each unit load to be gripped, carried, then transported.

4. Grab according to any of the preceding claims, characterised in that the members (12, 13) for clamping and maintaining each unit load (s) in a correctly centred position consist of two flaps (12, 13) associated with each of the sets of claws (10, 11) respectively, said flaps being mounted for pivoting about the same axes (35, 35') as the pivot axes of the sets of claws (10, 11) on the oscillating levers (67, 68, 67a, 68a).

5. Grab according to any of the preceding claims, characterised in that the means for supply of compressed air and electricity to the different members for control of the sets of claws (10, 11), levers, flaps (12, 13), etc. are arranged to allow rotary displacements through 360° without having to return to a starting position.

6. Grab according to claim 5, characterised in that the means for supply of compressed air to the different members for control of the sets of claws (10, 11), levers, flaps (12, 13), etc. are placed on a rotatably mounted element (18) and branch off from a main supply pipe by means of a revolving joint (93), the power supply - like the connections of the sensor members associated with the different movable components - being provided by an electrical commutator with rings and brushes (92) which is placed in the axis of the revolving joint (93) and through which passes the compressed air pipe (95).

7. Palletiser with single grip, characterised in that it includes a grab (G) according to any of the preceding claims.

8. Palletiser according to claim 7, including:
- a conveyor belt (bt) followed by a roller conveyor (CR) for delivery of the loads such as bags (s) to a predetermined high level above the ground;
- means for control of the movements of rotational and translational displacement of the carriage (C) carrying the grab (G);
- a gantry (po) supporting the carriage (C) translationally movable in a direction (L) perpendicular to that of the translational movement of the carriage; and an elevator (E) for displacing a pallet (P) delivered initially empty to the high level, then lowering it gradually in proportion to loading thereof before withdrawing it by a discharge roller conveyor, characterised in that it includes guide edges (100, 101) to aid positioning on the initially empty pallet (P), then on the successive layers (co₁, co₂) with which it is provided, of the unit loads is) deposited by the grab (G).

9. Method of palletising loads such as bags (s) comprising the steps consisting of:
a) delivering a load opposite a handling grab mounted for rotation about an axis (A) perpendicular to that (F) of translational displacement of a carriage (C) to which it is connected, and which comprises two sets of claws (10, 11) designed to grip, then carry a unit load as well as members (12, 13) for clamping and maintaining said unit load (s) comprising means (67, 68, 75, 76...83, 83a) suitable for lifting and/or lowering the two sets (10, 11) of claws and members (12, 13) for clamping and maintaining the unit load transported relative to said movable carriage (C);
b) gripping the load with the grab;
c) positioning the grab above a pallet;
d) releasing the load to deposit it on the pallet properly speaking (P) or on a layer of other loads already deposited on said pallet (P);
e) recommencing cycles a) to d) until formation of a pallet,
characterised in that said means comprise levers oscillating about a horizontal axis and carrying at their ends remote from this axis the sets of claws and the members for clamping and maintaining the unit load, and in that, between steps a) and b), it comprises a step (f) consisting of lowering the two sets of claws (10, 11) and members (12, 13) for clamping and maintaining the unit load relative to said movable carriage (C), and in that, between steps b) and c), it comprises a step g) consisting of lifting the two sets of claws and members for clamping and maintaining the unit load relative to the movable carriage.

## Patentansprüche

1. Greifer zum Handhaben von Lasten wie Säcke (s), der drehbar um eine Achse (A) montiert ist, die senkrecht zu derjenigen (F) der Parallelverschiebung eines Wagens (C) ist, mit dem er verbunden ist, und der zwei Klauengruppen (10, 11), die dazu bestimmt sind, eine Einheitslast zu ergreifen und dann zu tragen, sowie Organe (12, 13) zur Klemmung und zum Halten dieser Einheitslast (s) während ihres Transports zwischen einer ersten Position, wo die Last ergriffen worden ist, und einer zweiten Position, wo die Last abgelegt wird, aufweist, wobei mit den zwei Gruppen (10, 11) von Klauen und den Organen (12, 13) zur Klemmung und zum Halten der transportierten Einheitslast Mittel (67, 68, 75, 76 ... 83, 83ₐ) assoziiert sind, die dafür geeignet sind, sie in bezug auf den beweglichen Wagen (C) anzuheben und/oder abzusenken, dadurch gekennzeichnet, daß diese Mittel Hebel (67, 68) umfassen, die um eine horizontale Achse (66) schwingen und an ihren von dieser Achse entfernten Enden die Klauengruppen und die Klemm- und Halteorgane für die Last tragen.

2. Greifer nach Anspruch 1, dadurch gekennzeichnet, daß die Aufwärts- und/oder Abwärtsbewegungen der Klauen sowie diejenigen der Organe (12, 13) zum Halten und zur Klemmung jeder Einheitslast (s) Hebel (67, 68, 67ₐ, 68ₐ) einbeziehen, die an einem ihrer Enden Schwenkgelenkachsen für die Klauengruppen (10, 11) und die Klemmorgane (12, 13) tragen und die mit ihren anderen Enden um eine Achse (66) schwingend montiert sind, die parallel zu derjenigen der Parallelverschiebung (F) des Wagens (C) ist.

3. Greifer nach Anspruch 1 oder 2, dadurch gekennzeichnet, daß die Enden der Klauen (30, 30') mit Rollen (32) versehen sind, welche die Positionierung der Klauen unter jeder zu ergreifenden, zu tragenden und dann zu transportierenden Einheitslast erleichtern.

4. Greifer nach irgendeinem der vorhergehenden Ansprüche, dadurch gekennzeichnet, daß die Organe (12, 13) zur Klemmung und zum Halten jeder Einheitslast (s) in einer korrekt zentrierten Position von zwei Klappen (12, 13) gebildet werden, die jeweils mit jeder der Klauengruppen (10, 11) assoziiert sind, wobei diese Klappen schwenkbar um dieselben Achsen (35, 35') wie die Schwenkachsen der Klauengruppen (10, 11) an den sich hin- und herbewegenden Hebeln (67, 68, 67ₐ, 68ₐ) montiert sind.

5. Greifer nach irgendeinem der vorhergehenden Ansprüche, dadurch gekennzeichnet, daß die Mittel zur Druckluft- und Elektrizitätsversorgung der verschiedenen Antriebsorgane der Klauengruppen (10, 11), Hebel, Klappen (12, 13) usw... so vorgesehen sind, daß sie Drehverschiebungen um 360° gestatten, ohne daß eine Rückkehr in eine Ausgangsstellung erforderlich ist.

6. Greifer nach Anspruch 5, dadurch gekennzeichnet, daß die Mittel zur Druckluftversorgung der verschiedenen Antriebsorgane der Klauengruppen (10, 11), Hebel, Klappen (12, 13) usw... auf einem drehbar montierten beweglichen Organ (18) angeordnet sind und von einer Hauptzufuhrleitung mittels einer Drehverbindung (93) abzweigen, wobei die elektrische Versorgung - ebenso wie die Anschlüsse der Meßfühlerorgane, die mit den verschiedenen beweglichen Teilen assoziiert sind - durch einen elektrischen Kollektor mit Schleifringen und Bürsten (92) verwirklicht ist, der in der Achse der Drehverbindung (93) angeordnet ist und durch den die Druckluftleitung (95) hindurchläuft.

7. Palettiervorrichtung mit Stückübernahme, dadurch gekennzeichnet, daß sie einen Greifer (G) nach irgendeinem der vorhergehenden Ansprüche umfaßt.

8. Palettiervorrichtung nach Anspruch 7, welche umfaßt:
• ein Förderband (bt) mit einem daran anschließenden Rollenförderer (CR) für das Bringen von Lasten wie Säcke (s) auf ein vorbestimmtes hohes Niveau über dem Boden;
• Mittel zur Steuerung der Dreh- und Translationsbewegungen des Wagens (C), der den Greifer (G) trägt;
• eine Verladebrücke (po), die den Wagen (C) trägt und die in einer Richtung (L) senkrecht zur derjenigen (F) der Translationsbewegung des Wagens parallelverschoben werden kann; und
• ein Hebewerk (E), um eine angelieferte, zunächst leere Palette (P) auf das hohe Niveau zu verschieben, dann diese nach und nach je nach ihrem Beladungszustand abzusenken, bevor sie von einem abführenden Rollenförderer entnommen wird,
dadurch gekennzeichnet, daß sie Führungskanten (100, 101) umfaßt, die bei der Positionierung der von dem Greifer (G) abgelegten Einheitslasten (s) auf der zunächst leeren Palette (P) und dann auf den aufeinanderfolgenden Lagen (co₁, co₂), mit denen diese belegt ist, helfen.

9. Verfahren zum Palettieren von Lasten wie Säcke (s) mit den folgenden Schritten, die darin bestehen:
a) eine Last in die Lotrechte eines Greifers zum Handhaben anzuliefern, der drehbar um eine Achse (A) montiert ist, die senkrecht zu derjenigen (F) der Parallelverschiebung eines Wagens (C) ist, mit dem er verbunden ist, und der zwei Klauengruppen (10, 11), die dazu bestimmt sind, eine Einheitslast zu ergreifen und dann zu tragen, sowie Organe (12, 13) zur Klemmung und zum Halten dieser Einheitslast (s) aufweist und Mittel (67, 68, 75, 76 ... 83, 83ₐ) umfaßt, die dafür geeignet sind, die zwei Klauengruppen (10, 11) und Organe (12, 13) zur Klemmung und zum Halten der transportierten Einheitslast in bezug auf den beweglichen Wagen (C) anzuheben und/oder abzusenken;
b) die Last mit dem Greifer zu ergreifen;
c) den Greifer über einer Palette zu positionieren;
d) die Last freizugeben, um sie auf der eigentlichen Palette (P) oder auf einer Lage anderer, bereits auf dieser Palette (P) abgelegter Lasten abzulegen;
e) die Zyklen a) bis d) bis zur Fertigstellung einer Palette erneut zu beginnen,
dadurch gekennzeichnet, daß die genannten Mittel Hebel umfassen, die um eine horizontale Achse schwingen und an ihren von dieser Achse entfernten Enden die Klauengruppen und die Klemm- und Halteorgane für die Einheitslast tragen, daß es zwischen den Schritten a) und b) einen Schritt f) aufweist, der darin besteht, die zwei Klauengruppen (10, 11) und Organe (12, 13) zur Klemmung und zum Halten der Einheitslast in bezug auf den beweglichen Wagen (C) abzusenken, und daß es zwischen den Schritten b) und c) einen Schritt g) aufweist, der darin besteht, die zwei Klauengruppen und Organe zur Klemmung und zum Halten der Einheitslast in bezug auf den beweglichen Wagen anzuheben.
